Europäisches Patentamt

European Patent Office

Office européen des brevets

(19)

(11) Veröffentlichungsnummer: **0 190 663**
**A2**

(12) # EUROPÄISCHE PATENTANMELDUNG

(21) Anmeldenummer: 86101194.8

(22) Anmeldetag: 30.01.86

(51) Int. Cl.⁴: **B 29 C 67/22**
**B 29 C 33/20, B 29 C 33/30**
**//B29K105:04**

(30) Priorität: 02.02.85 DE 3503623

(43) Veröffentlichungstag der Anmeldung:
13.08.86 Patentblatt 86/33

(84) Benannte Vertragsstaaten:
DE FR GB IT NL

(71) Anmelder: Erlenbach, Hans
Hermann-Löns-Strasse 13
D-5428 Nastätten(DE)

(72) Erfinder: Erlenbach, Hans
Hermann-Löns-Strasse 13
D-5428 Nastätten(DE)

(74) Vertreter: Selda, Heinrich, Dipl.-Phys.
Bierstadter Höhe 15 Postfach 5105
D-6200 Wiesbaden(DE)

(54) Werkzeug zum Herstellen von Formlingen aus aufschäumbaren Kunststoffpartikeln.

(57) Bei Werkzeugen zum Herstellen von Formlingen aus aufschäumbaren Kunststoffpartikeln mit trennbaren Werkzeugteilen (11, 12) wird eine wesentlich vereinfachte, erleichterte und verbesserte Austauschbarkeit von Formwandteilen (14, 33) durch das Zusammenwirken folgender Maßnahmen erzielt:

a) Die Formwandteile (14, 33) sind mittels fest und bleibend mit ihnen verbundener, flanschartiger oder plattenartiger Formwandträger (15, 34, 35) zu leicht handhabbaren Formwandeinheiten (13, 32) ausgebildet.

b) Die Formwandträger (15, 34, 35) passen mit ihrem Randbereich in entsprechende Aufnahmen der äußeren Werkzeugwandteile (16, 38) und sind dort auch ggf. abgedichtet.

c) In den rahmenartig ausgebildeten äußeren Werkzeugwandteilen (16, 38) sind Riegelelemente (22, 46) beweglich angebracht, die vorreiberartig über die Randbereiche der Formwandträger (15, 34, 35) bewegbar sind.

Die in einem Werkzeugteil (11, 12) angeordneten Riegelelemente (22, 46) können mit Einrichtungen zu gleichzeitiger, gemeinsamer Betätigung verbunden sein.

./...

Croydon Printing Company Ltd.

Fig.1

=================================================

Werkzeug zum Herstellen von Formlingen
aus aufschäumbaren Kunststoffpartikeln

=================================================

Die Erfindung betrifft Werkzeuge zum Herstellen von Formlingen aus aufschäumbaren Kunststoffpartikeln mit trennbaren Werkzeugteilen, vorzugsweise einer schalenartigen
und einer kernartigen Werkzeughälfte, wobei den Formhohlraum umgebende, innere Formwandteile austauschbar in
äußeren Werkzeugwandteilen angebracht sind und zwischen
den inneren Formwandteilen und äußeren Werkzeugwandteilen
nach außen abgedichtete, verschließbare Hohlräume als
Kammern für Heiz- und Kühlmittel sowie ggf. für Dampfzufuhr
gebildet sind.

Bei Werkzeugen dieser Art, wie sie beispielsweise aus
DE-OS 29 40 815 bekannt sind, sind die inneren Formwandteile mittels Schraubenverbindungen an den äußeren Werkzeugwandteilen befestigt. Hierdurch sind die Formwandteile
zwar austauschbar. Jedoch ist jeder Formwechsel mit umfangreichen Ausricht- und Befestigungsarbeiten verbunden.

Demgegenüber ist es Aufgabe der Erfindung, bei Werkzeugen
der oben angesprochenen Art den Formwechsel wesentlich zu
erleichtern und zugleich mit dem Einsetzen und Befestigen
der ausgetauschen Formwand auch die genaue Justierung
an den Werkzeugwandteilen zu gewährleisten. Die für einen
Formwechsel erforderlichen Arbeiten sollen auf diese Weise
wesentlich erleichtert und vermindert werden. Der für einen
Formwechsel erforderliche Zeitaufwand soll gegenüber
Formwechsel bei den herkömmlichen Werkzeugen dieser Art
auf einen Bruchteil herabgesetzt werden.

Diese Aufgabe wird erfindungsgemäß dadurch gelöst, daß in zumindest einem der Werkzeugteile eine Formwandeinheit vorgesehen ist, bei der der jeweilige Formwandteil bzw. jeweiligen Formwandteile an mindestens einem flansch- oder plattenartigen Formwandträger befestigt ist bzw. sind, wobei der Formwandträger abgedichtet passend in den rahmenartig ausgebildeten Werkzeugwandteil einsetzbar und mittels Riegelelementen im Werkzeugwandteil befestigbar ist.

Durch die Schaffung von Formwandeinheiten mit abgedichtet und passend in den jeweiligen Werkzeugwandteil einsetzbarem Formwandträger läßt sich die Verbindungsstelle zwische dem Formwandträger und dem jeweiligen Werkzeugwandteil beim ersten Einrichten der Formwand in der Werkzeugwand so genau ausbilden, daß bei jedem erneuten Einsetzen der Formwandeinheit in die Werkzeugwand wieder die ursprüngliche Justage praktisch ohne Nachjustieren erreicht wird. Durch die Schaffung einer in sich stabilen und gegenüber der Werkzeugwand einmal angepaßten Formwandeinheit wird auch erreicht, daß auf feste Verschraubung und Verankerung der Formwand an der äußeren Werkzeugwand zur Sicherung der Justierung während des Betriebes verzichtet werden kann. Vielmehr ist erfindungsgemäß die Formwandeinheit lediglich mittels Riegelelementen im Werkzeugwandteil befestigbar. Durch das funktionelle Zusammenwirken der in sich stabilen Formwandeinheit mit den zu ihrer Befestigung im Werkzeugwandteil vorgesehenen Riegelelemente wird der Formwechsel an erfindungsgemäßen Werkzeugen schnell und einfach durchführbar, nämlich durch Lösen der Riegelelemente, Herausnehmen der bisherigen Formwandeinheit aus dem Werkzeugwandteil, Einsetzen der passend zugearbeiteten gewünschten anderen Formwandeinheit und Schließen der Riegelelemente. Die herausgenommene Formwandeinheit kann dann auf Lager genommen und für gewünschten erneuten Einsatz bereitgehalten werden.

In einer bevorzugten Ausführungsform der Erfindung sind im rahmenartig ausgebildeten Werkzeugwandteil vorreiberartige Schwenkriegelelemente angebracht, die verkeilend auf an den Formwandträgern angebrachte oder ausgebildete Verriegelungsflächen greifen und dabei den Randbereich des jeweiligen Formwandträgers gegen eine im Werkzeugwandteil ausgebildete Widerlagerfläche und ein dort angebrachtes Dichtungselement pressen. Diese Schwenkriegelelemente sichern auf diese Weise gleichzeitig den genauen Sitz der Formwandeinheit im Werkzeugwandteil und die gewünschte Abdichtung. Dabei lassen sich solche Schwenkriegelelemente besonders günstig im Werkzeugwandteil lagern und auch in besonders einfacher Weise betätigen. Die Schwenkriegelelemente können dabei mit auf die Verriegelungsflächen am Formwandträger greifenden Keilflächen versehen sein. Stattdessen oder ergänzend können auch die Verriegelungsflächen der Formwandträger mit Keilflächen versehen sein, die mit den Schwenkriegelelementen verkeilend zusammengreifen.

Für ihre bewegliche Anbringung können die Schwenkriegelelemente bevorzugt an drehbar im jeweiligen Werkzeugwandteil gelagerten Schwenkriegelschäften angebracht sein. Sichere Verriegelung und Freigabe lassen sich bei geringem Platzbedarf erreichen, wenn man die Schwenkriegelelemente für einen Schwenkbereich von 90° zwischen Freigabestellung und Verriegelungsstellung ausbildet.

Im Rahmen der Erfindung kann die Formwandeinheit jeglichen denkbaren Anforderungen und maschinellen Voraussetzungen entsprechend ausgebildet werden. Die Erfindung läßt sich dadurch ebensogut bei horizontal bewegten Werkzeugen wie bei vertikal bewegten Werkzeugen sowie bei Formwerkzeugen jeglicher maschinell bedingter Konstruktion anwenden.

Beispielsweise kommt im Rahmen der Erfindung eine Formwandeinheit in Betracht, bei der der Formwandteil bzw. die Formwandteile zwischen zwei flansch- bzw. plattenartigen Formwandträgern angebracht ist bzw. sind, von welchen der eine Formwandträger die Vorderwand und der andere Formwandträger die Rückwand für die außerhalb des Formhohlraumes liegenden Werkzeughohlräume bildet, wobei der Formwandteil bzw. die Formwandteile mit ihrem Rücken ggf. über Abstützelemente gegen den die Rückwand bildenden Formwandträger abgestützt ist bzw. sind. Eine solche Formwandeinheit zeichnet sich mit ihren beiden Formwandträgern durch besonders hohe Stabilität aus und läßt sich deshalb auch beim Einsetzen in den Werkzeugwandteil und beim Herausnehmen aus dem Werkzeugwandteil gut handhaben. Dabei kann bei mit der Formwandeinheit verbundenen Zusatzeinrichtungen, wie Injektoren, Auswerfereinrichtungen, Dampfzuführungseinrichtungen usw., der mit dem Rücken des Formwandteiles bzw. der Formwandteile verbundene Formwandträger zugleich als Träger für diese Zusatzeinrichtungen ausgebildet sein.

Besonders zweckmäßig ist es, solche durch zwei Formwandträger mit dazwischen befestigtem Formwandteil bzw. Formwandteilen gebildete Formwandeinheiten zum Einsetzen von der offenen Rahmenseite her in den jeweiligen Werkzeugwandteil auszubilden.

Für Formwandeinheiten mit zwei den Formwandteil bzw. die Formwandteile zwischen sich aufnehmenden, flansch- oder plattenförmigen Formwandträger wird man bevorzugt je zwei Schwenkriegelelemente mit ihren Schwenkriegelschäften zu axial ausgerichteten Schwenkriegelpaaren vereinigen, von denen das eine Schwenkriegelelement auf den einen Formwandträger und das andere Schwenkriegelelement auf den zweiten Formwandträger greift.

Bei einer anderen im Rahmen der Erfindung benutzbaren Ausführungsweise weist der rahmenartig ausgebildete Werkzeugwandteil eine fest angebrachte Rückwand auf, während der Formwandteil bzw. die Formwandteile mit einem einzigen flansch- oder plattenförmigen Formwandträger eine am Öffnungsrand des rahmenartigen Werkzeugwandteiles passend und abgedichtet einsetzbare und verriegelbare Formwandeinheit bildet bzw. bilden, die ggf. auf die Innenseite der Rückwand des Werkzeugwandteiles greifende Abstützelemente aufweist. Die Benutzung solcher auf die Innenseite der Rückwand des Werkzeugwandteiles greifender Abstützelemente und deren Anordnungsweise können dabei von der Flächengröße der jeweiligen Formwandeinheit abhängig gemacht werden. Diese Ausbildungsweise des Werkzeugwandteiles und der Formwandeinheit eignet sich besonders für kernartige Werkzeugteile oder Werkzeughälften. Hierzu kann ein mit seinem Umfangsrand am Öffnungsrand des rahmenartigen Werkzeugwandteiles passend ansetzbarer und verriegelbarer, plattenförmiger Formwandträger vorgesehen sein, der an seiner Vorderseite einen oder mehrere kernförmige Formwandteile und ggf. an der Rückseite Abstützelemente trägt.

Für die Verriegelung der Formwandeinheit an dem rahmenartig Werkzeugwandteil sind in einer besonders vorteilhaften Ausführungsform der Erfindung die Schwenkriegelelemente beweglich am Werkzeugwandteil angebracht und die an demselben Werkzeugwandteil angebrachten Schwenkriegelelemente mit Einrichtungen zu gemeinsamer Betätigung verbunden. Dabei können die Schwenkriegelelemente mit Betätigungshebeln zum Erzeugen einer Drehbewegung des Schwenkriegelschaftes verbunden und diese Betätigungshebel über flexible Zugelemente, bei ielsweise Ketten oder Zugkabel, untereinander verbunden sein. Hierdurch wird die gemeinsame Betätigung der Schwenkriegelelemente ermöglicht. Man kann dazu noch mindestens eine am Betätigungshebel eines Schwenk·

riegelelementes angreifende, maschinelle Betätigungseinrichtung, eispielsweise ein hydraulische Zylinder-Kolben-Anordnung vorsehen. Hierdurch läßt sich der Entriegelungsvorgang und Verriegelungsvorgang an allen Schwenkriegelelementes eines Werkzeugteiles gleichzeitig ausführen. Beim Formwechsel werden dadurch der Entriegelungsvorgang und der Verriegelungsvorgang sehr viel sicherer und genauer mit dem Herausnehmen einer Formeinheit bzw. dem Einsetzen einer Formeinheit abstimmbar. Naturgemäß wird man bei gemeinsamer Betätigbarkeit sämtlicher Verriegelungselemente geeignete Sicherungen gegen ungewolltes Entriegeln vorsehen.

Ein Ausführungsbeispiel der Erfindung wird im folgenden anhand der Zeichnung näher erläutert. Es zeigen:

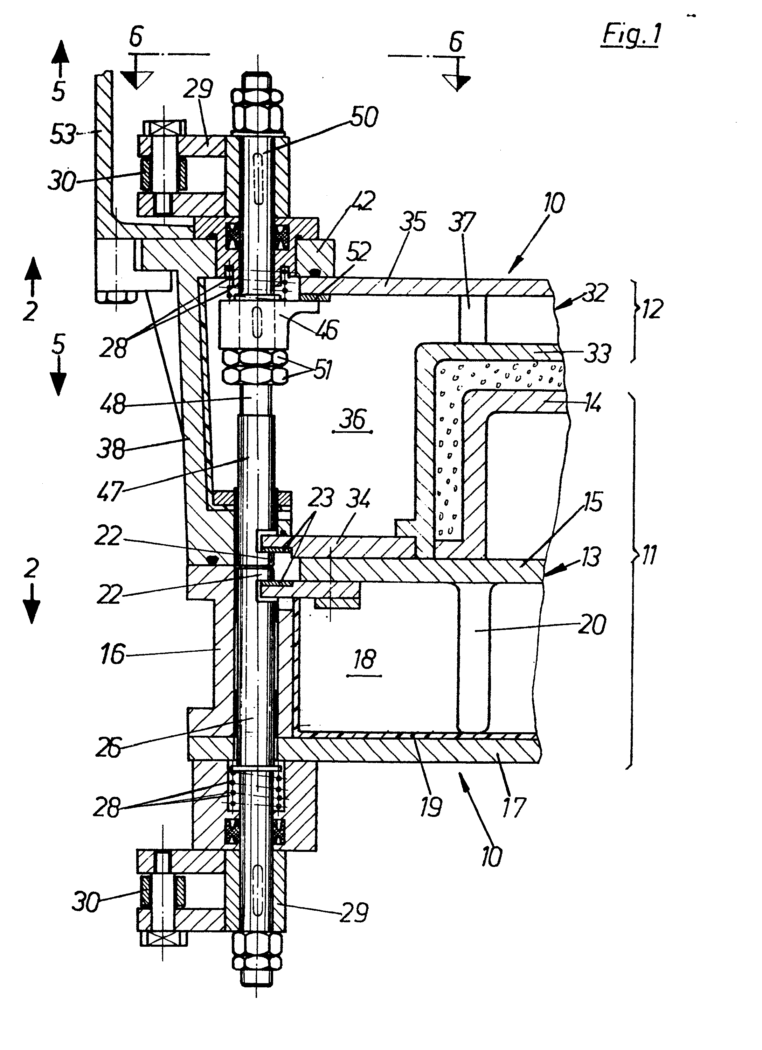

Fig. 1   den Randbereich eines erfindungsgemäßen Formwerkzeugs im Schnitt;

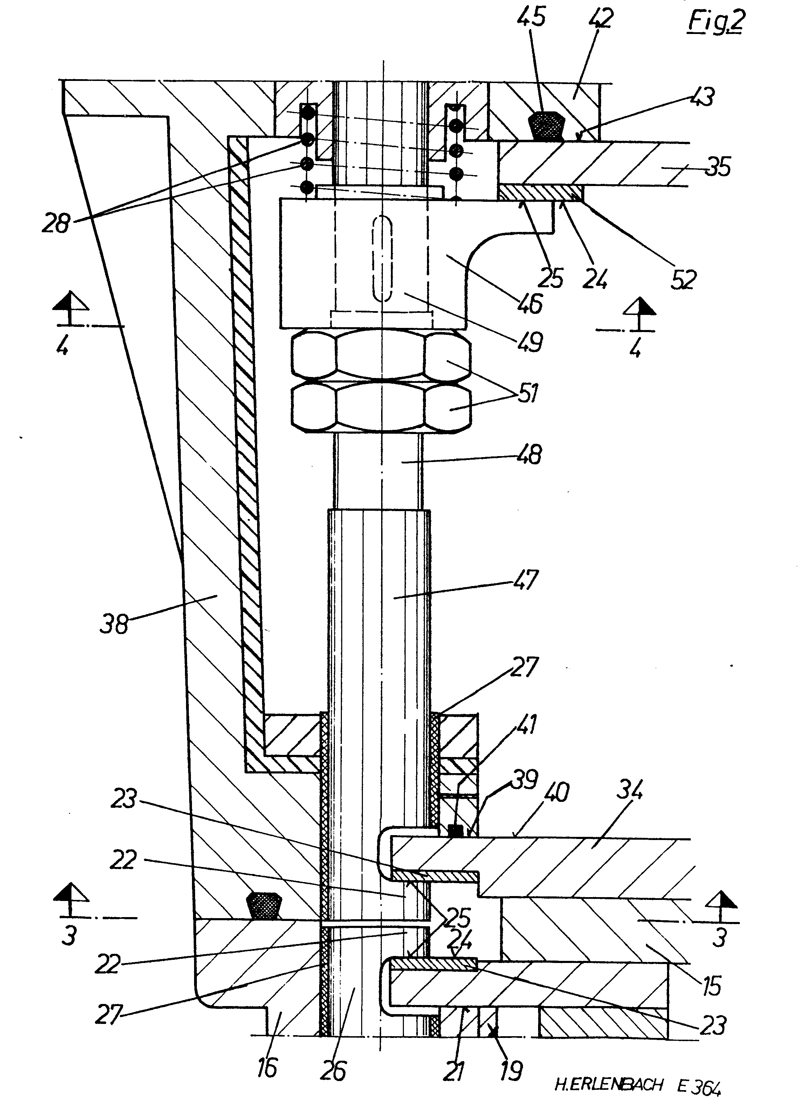

Fig. 2   den Teilbereich 2-2 in Figur 1 in vergrößerter Darstellung;

Fig. 3   einen Schwenkriegel einer Ausführung in Draufsicht gemäß 3-3 der Figur 2;

Fig. 4   einen Schwenkriegel anderer Ausführung in Draufsicht gemäß 4-4 der Figur 2;

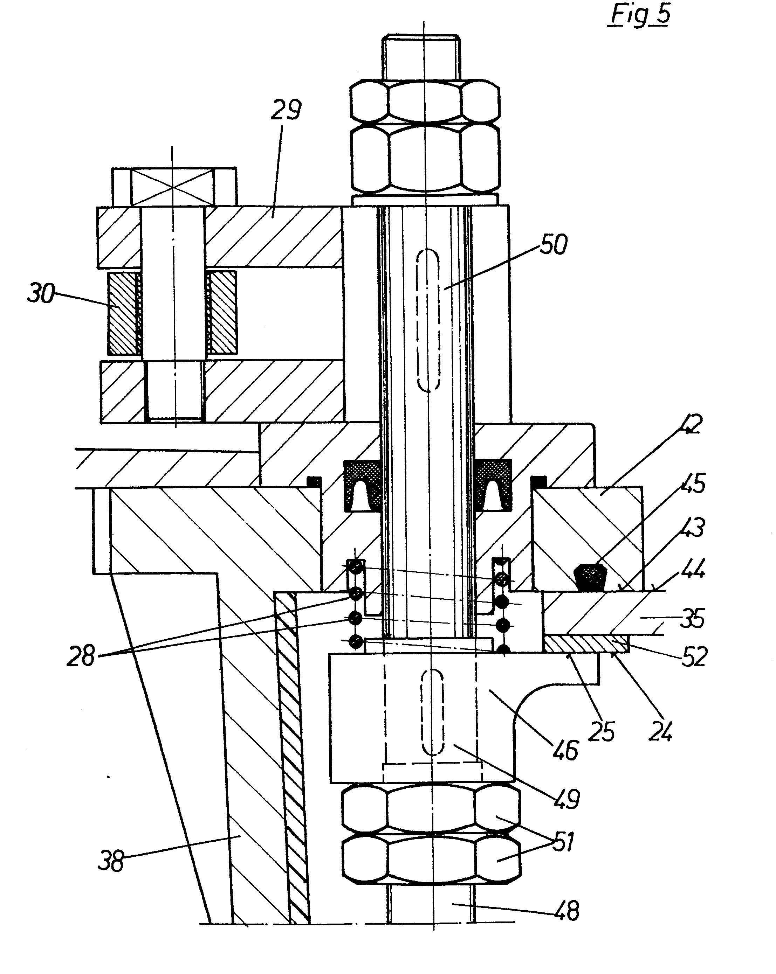

Fig. 5   den Ausschnitt 5 aus Figur 1 in vergrößerter Darstellung
und

Fig. 6   eine schematische Draufsichtdarstellung gemäß 6-6 der Figur 1 auf die gemeinsame Betätigung vorrichtung der Schwenkriegel.

Im dargestellten Beispiel ist das Formwerkzeug 10 mit einer kernartigen Werkzeughälfte 11 und einer schalenartigen oder haubenartigen Werkzeughälfte 12 ausgebildet. Die kernartige Werkzeughälfte 11 ist im dargestellten Beispiel fest angebracht, während die schalenartige oder haubenartige Werkzeughälfte 12 schräg nach oben und unten hin und her
beweglich ist.

Die kernartige Werkzeughälfte 11 enthält eine Formwandeinheit 13, bei der eine oder mehrere kernförmige Formwandteile 14 auf einem plattenförmigen Formwandträger
15 bleibend befestigt ist. Ferner enthält die kernartige
Werkzeughälfte 11 einen rahmenartigen Werkzeugwandteil 16,
der an seiner Unterseite eine fest angebrachte Rückenwand 17 trägt. Der von dem rahmenartigen Werkzeugwandteil
16 und der Rückenwand 17 gebildete und an der Vorderseite
mit dem plattenförmigen Formwandträger 15 abgeschlossene
Werkzeughohlraum 18 ist mit einer Gummierung 19 ausgelegt,
die an ihrem Öffnungsrand zugleich ein Dichtungselement
bildet, an das sich der plattenförmige Formwandträger
15 mit der Rückseite seines Umfangsrandbereiches anlegt.
Falls die kernartige Werkzeughälfte 11 und damit der
plattenförmige Formwandträger 15 großflächig ausgebildet
ist, sind an der Rückseite des plattenförmigen Formwandträgers 15 Abstützelemente in geeigneter Anzahl und Anordnung angebracht, die sich auf der Innenfläche der Rückenwand 17 bzw. an der Gummierung 19 abstützen.

Die Formwandeinheit 13 ist mit ihrem plattenförmigen Formwandträger 15 passend in den entsprechend vertieft ausgebildeten inneren Teil des Öffnungsrandes des rahmenartigen
Werkzeugwandteiles 16 eingesetzt und legt sich dabei mit
seiner entsprechend bearbeiteten ringförmigen Rückenfläche
des Umfangsrandteiles auf eine in dem Werkzeugwandteil
16 ausgebildete, entsprechend bearbeitete ringförmige
Widerlagerfläche 21.

Am Umfang des Werkzeugwandteiles 16 verteilt sind Schwenkriegelelemente 22 gelagert, die verkeilend auf Verriegelungsflächenelemente 23 greifen, welche im Bereich des

Umfangsrandes auf dem plattenförmigen Formwandträger 15 angebracht sind. Die Verriegelungsflächenelemente 23 sind aus hartem Edelstahl hergestellt und weisen Keilflächen 24 auf. Die Schwenkriegelelemente 22 können ebenfalls mit entsprechenden Keilflächen 25 ausgestattet sein, die mit den Keilflächen 24 zusammenwirken, um durch Verschwenken der Schwenkriegelelemente 22 ein verkeilendes Festziehen des plattenförmigen Formwandträgers 15 auf der Wiederlagerfläche 21 in Art eines Vorreibers zu erzeugen und dabei eine Flächenberührung zwischen den Keilflächen 24 und 25 sicherzustellen.

Jeder Schwenkriegel 22 ist im dargestellten Beispiel einstückig an einem Schwenkriegelschaft 26 ausgebildet. Jeder Schwenkriegelschaft ist mittels Lagerbuchsen 27 drehbar im rahmenartigen Werkzeugwandteil 16 gelagert. Ferner ist jeder Schwenkriegelschaft 26 mit einer Druckfeder 28 versehen, die den Schwenkriegelschaft axial in Bereitschaftstellung des jeweiligen Schwenkriegels 22 zur Aufnahme des jeweiligen Formwandträgers 15 drückt.

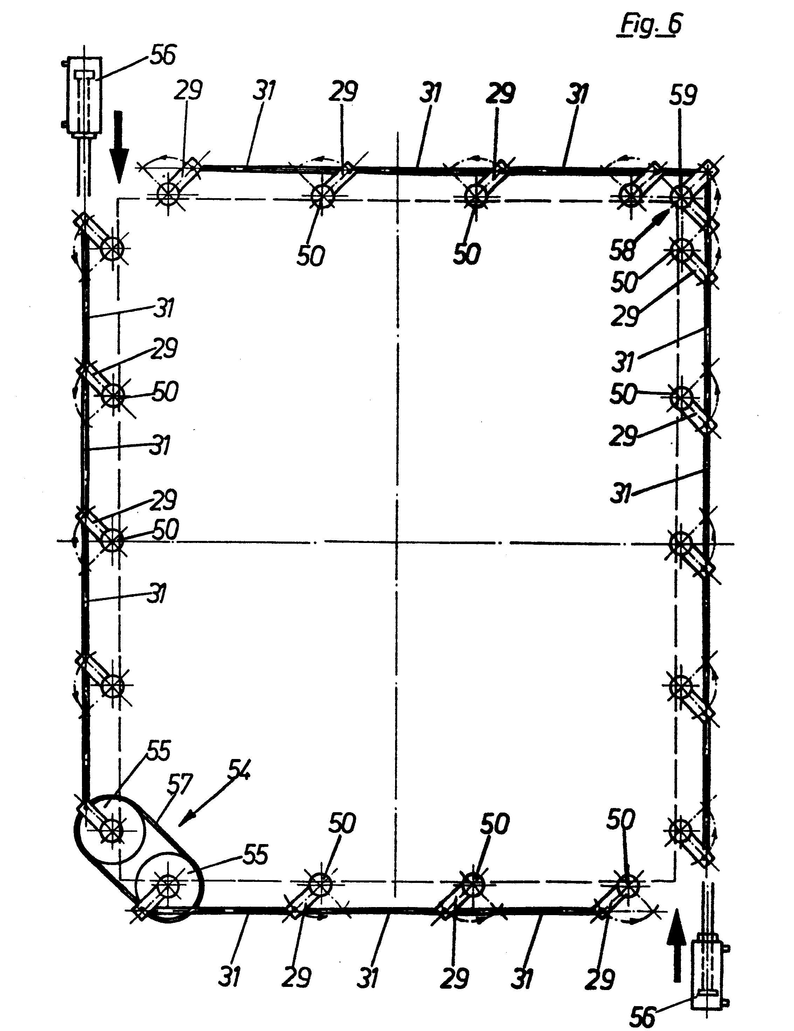

Mit seinem dem Schwenkriegelelement 22 entgegengesetzten Ende ragt jeder Schwenkriegelschaft 26 aus dem rahmenartigen Werkzeugwandteil 16 heraus und trägt dort einen einarmigen Betäigungshebel 29, an den mittels eines im Betätigungshebel 29 schwenkbar gelagerten Verbindungselementes 30 ein Zugelement 31 angesetzt ist. Diese Zugelemente 31 verbinden sämtliche Betätigungshebel 29 der an einem Werkzeugteil, beispielsweise der kernartigen Werkzeughälfte 11 angebrachten Schwenkriegelelemente 22, wie dies in Verbindung mit Figur 6 näher erläutert wird.

Die schalen- oder haubenartige Werkzeughälfte 12 enthält eine Formwandeinheit 32, die ein oder mehrere haubenartige Formwandteile 33 und zwei Formwandträger 34 und 35 aufweist. Der vordere Formwandträger 34 ist flanschartig ausgebildet. In ihm ist der Öffnungsrand des haubenartigen Formwandteiles 33 bleibend befestigt, beispielsweise eingeschraubt. Zugleich bildet der vordere Formwandträger 34 die vordere Abschlußwand für die den haubenartigen Formwandteil 33 umgebenden Werkzeughohlräume 36 der schalen- oder haubenartigen Werkzeughälfte 12. Der rückwärtige Formwandträger 35 ist plattenförmig ausgebildet und über Abstützelemente 37 mit dem Rücken des Formwandteiles 32 fest und bleibend verbunden. Dieser rückwärtige, plattenförmige Formwandträger 35 bildet zugleich die Rückwand für die Werkzeughohlräume 36 sowie den Träger für an den haubenartigen Formwandteil 33 bzw. Formwandteile angesetzte Hilfseinrichtungen, wie Injektoren, Auswerfereinrichtungen, Dampfzuführungseinrichtungen usw.. Falls das Formwerkzeug 10 zur Herstellung von Formlingen im Trockenschäumverfahren gedacht ist, können die zum Zuführen von Heißdampf zum Verschweißen der Kunststoffschaumpartikel vorgesehenen Dampfeinführungsleitungen abgedichtet durch den plattenförmigen Formwandträger 35 geführt sein. Es ist auch denkbar, daß der plattenförmige Formwandträger 35 eine Trennwand zwischen den Werkzeughohlräumen 36 und einer hinter dem plattenförmigen Formwandträger 35 angeordneten Heißdampf-Verteilerkammer bildet, wobei der platten förmige Formwandträger 35 sogar als Träger für die Teile einer solchen Heißdampf-Verteilerkammer und deren Hilfseinrichtungen wie Dampfventile u.dgl. sein kann.

Die schalen- oder haubenförmige Werkzeughälfte 12 weist einen rahmenartigen Werkzeugwandteil 38 auf, der an seinem der kernförmigen Werkzeughälfte 11 zugewandten Umfangsrand eine innere, vertiefte Widerlagerfläche 39 für die entsprechend bearbeitete rückseitige Fläche des flanschartigen Formwandträgers 34 aufweist. In diese Widerlagerfläche 39 ist ein ringförmiges Dichtelement 41 eingelegt, das zur Abdichtung der Werkzeughohlräume 36 an der Berührungsstelle zwischen dem flanschartigen Formwandträger 34 und dem Werkzeugwandteil 38 dient.

Für die Anlage des plattenförmigen Formwandträgers 35 ist der rahmenartige Werkzeugwandteil 38 an seinem der kernartigen Werkzeughälfte abgewandten Umfangsrand mit einem einwärts gerichteten Flanschring 42 ausgebildet, der sich soweit einwärts erstreckt, daß der plattenförmige Formwandträger 35 mit entsprechend kleinerer Breite und Länge ausgebildet werden kann als der flanschartige Formwandträger 34, so daß der plattenförmige Formwandträger einwärt der Widerlagerfläche 39 in den Werkzeugwandteil 38 eingeführt werden kann. An diesem Flanschring 42 ist eine ringförmige Widerlagerfläche 43 für die entsprechend bearbeitete ringförmige Anlagefläche am Umfangsbereich der Rückseite des plattenförmigen Formwandträgers 35. Im Bereich der Widerlagerfläche 43 ist ein ringförmiges Dichtelement 45 in den Flanschring 42 eingelegt, um eine wirksame Abdichtung der Werkzeughohlräume 36 an den Verbindungsbereichen zwischen dem plattenförmigen Formwandträger 35 und dem rahmenartigen Formwerkzeugteil 38 zu bilden.

Zum Verriegeln der Formwandeinheit 32 in dem rahmenartigen Werkzeugwandteil 38 sind Paare von Schwenkriegeln 22 und 46 vorgesehen. Die Schwenkriegel 22 sind in gleicher Weise ausgebildet wie diejenigen in der kernförmigen Werkzeughälfte 11 und wirken auch mit Verriegelungsflächenelementen 23 zusammen, die an dem flanschartigen Formwandträger 34 angebracht und im übrigen in gleicher Weise ausgebildet sind wie die Verriegelungsflächenelemente 23 am Formwandträger 15 der in die kernförmgie Werkzeughälfte eingesetzten Formwandeinheit 13. Im Unterschied zu der kernförmigen Werkzeughälfte 11 ist jedoch der Schwenkriegelschaft 47 abgesetzt ausgebildet, und zwar mit einem Gewindeabschnitt 48, einem Aufnahmeabschnitt 49 für den Klemmriegel 46 und einem den Betätigungshebel 29 tragenden Endabschnitt 50. Der Klemmriegelschaft 47 trägt somit ein Klemmriegelpaar 22, 46, wobei die axiale Abstandseinstellung der beiden Klemmriegel 22 und 46 mittels Kontermuttern 51 vorgenommen ist. Es ist auch möglich, den Klemmriegelschaft 47 im Gewindeabschnitt 48 zu unterteilen und durch die Kontermuttern 51 zusammenzuhalten.

Da die beiden Schwenkriegel 22 und 46 axial miteinander ausgerichtet sind, muß sich naturgemäß der Schwenkriegel 46 in Art eines Klemmriegels radial weiter erstrecken, um das auf der Innenseite des plattenförmigen Formwandträgers 35 angebrachte Verriegelungsflächenelement 52 zu erreichen. Analog zur Ausbildung der Keilflächen 24 und 25 an den Schwenkriegelelementen 22 und den Verriegelungsflächenelementen 23 sind auch an den Schwenkriegelelementen 46 und den Verriegelungsflächenelementen 52 zusammenwirkende Keilflächen ausgebildet.

Die Betätigungshebel 29 und die in ihnen schwenkbar gelagerten Verbindungselemente 30 sind in gleicher Weise ausgebildet wie in der kernförmigen Werkzeughälfte 11. Allerdings ist die Anordnung der Betätigungshebel 29 und der Zugelemente 31 in der beweglich angebrachten, schalen- bzw. haubenförmigen Werkzeughälfte 12 mit einem schützenden Formenrahmen 53 umgeben.

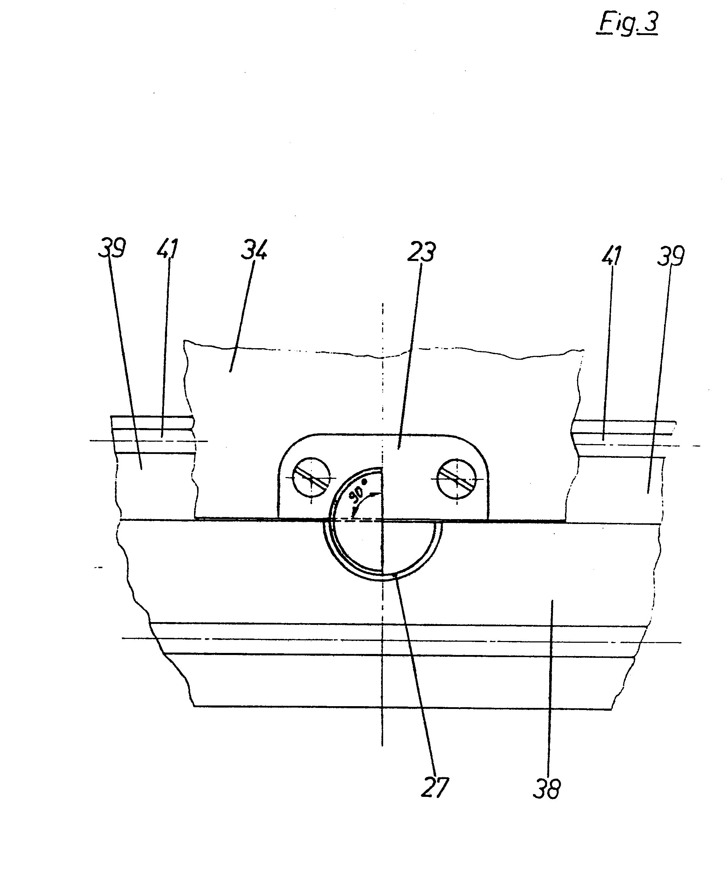

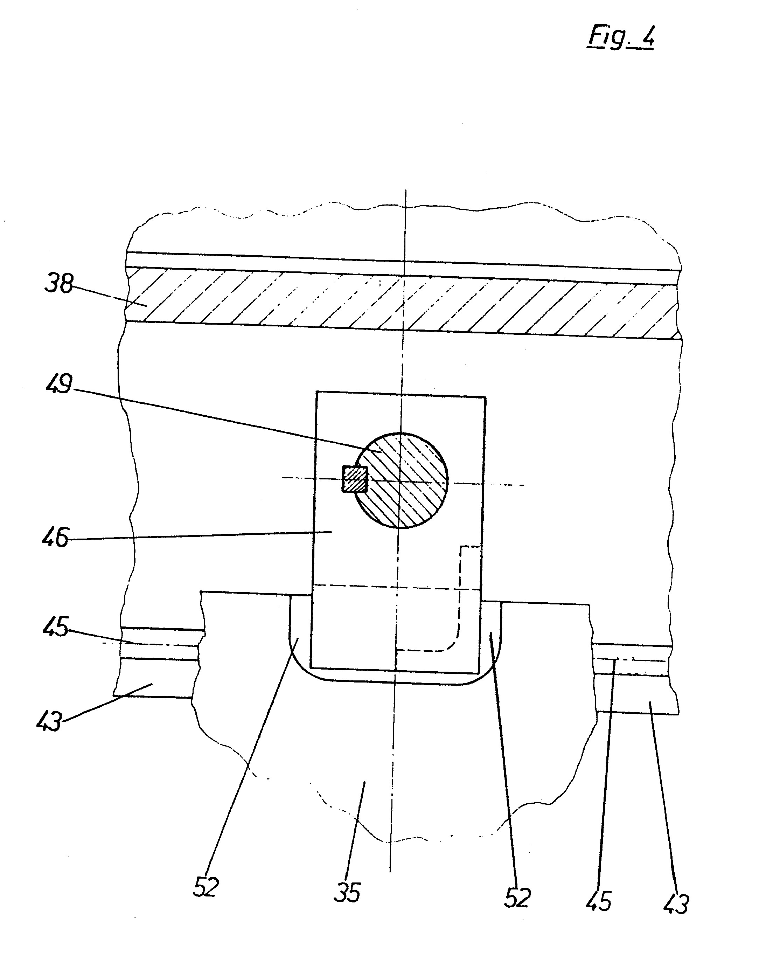

Wie aus den Figuren 3 und 4 ersichtlich, sind die Schwenkriegelelemente 22 und 46 derart ausgebildet, daß sie einen Schwenkbereich von 90° zwischen ihrer Freigabestellung und ihrer Verriegelungsstellung haben. Beim Schwenken der Schwenkriegelelemente 22 und 46 in die Verriegelungsstellung kommt es zum Verkeilen der Keilflächen und damit zum festen Aufpressen des Formwandträgers 15 auf die Widerlagerfläche 21 im Werkzeugwandteil 16 innerhalb der kernartigen Werkzeughälfte 11. Analog erfolgt in der schalen- oder haubenartigen Werkzeughälfte 12, auf die sich die Figuren 3 und 4 speziell beziehen, die gleichzeitige Verriegelung an den beiden Formwandträgern 34 und 35, wobei der Formwandträger 34 fest gegen die Widerlagerfläche 39 und der Formwandträger 35 fest gegen die Widerlagerfläche 43 im Werkzeugwandteil 38 gepreßt werden.

Wie aus Figur 6 ersichtlich, sind die Betätigungshebel 29 über die Zugelemente 31 untereinander verbunden. An den Ecken des jeweiligen Werkzeugteiles 11 bzw. 12 sind Eckverbindungseinrichtungen 54 angebracht. Hierzu ist beispielsweise der Betätigungshebel an den an den Ecken angeordneten Betätigungshebeln ein Kettenrad 55 ausgebildet. Um diese beiden Kettenräder ist eine Mitnehmerkette 57 gelegt, so daß die Betätigungshebel 29 auch über die Eckbereiche der Werkzeughälften 11 und 12 hinweg kraftschlüssig miteinander verbunden sind. Wie Figur 6 ferner zeigt, sind im dargestellten Beispiel zwei hydraulische Zylinder-Kolben-Anordnungen als Betätigungsvorrichtungen 56 für die Betätigungshebel 29 vorgesehen. Mit diesen hydraulischen Zylinder-Kolben-Anordnungen kann die erforderliche Kraft ausgeübt werden, um das Festklemmen und Verkeilen der Schwenkriegelelemente 22 und 46 an den Verriegelungsflächenelementen 23 und 52 sicherzustellen.

Für einen Formwechsel kann mit der oben beschriebenen Vorrichtung beispielsweise wie folgt verfahren werden:

Bei geschlossenem Formwerkzeug 10 werden die Schwenkriegelelemente 22 und 46 in der schalen- bzw. haubenartigen Werkzeughälfte 12 entriegelt. Der Werkzeugwandteil 38 der schalen- bzw. hauben-artigen Werkzeughälfte 12 wird dann vorsichtig mit der Werkzeug-Betätigungsvorrichtung abgehoben, so daß die Formwandeinheit 32 der schalen- bzw. haubenartigen Werkzeughälfte 12 auf der Formwandeinheit 13 der kernartigen Werkzeughälfte 11 liegen bleibt. Die beiden aufeinanderliegenden Formwandeinheiten 13 und 32 können dann mittels geeigneter Einrichtungen aneinander befestigt und gesichert werden. Es werden dann die Schwenkriegelelemente 22 in der kernartigen Werkzeughälfte 11 entriegelt. Die beiden Formwandeinheiten 13 und 32 können dann mit geeigneten Einrichtungen abgehoben und an ihren Aufbewahrungsort gebracht werden. Die anstelle der bisherigen Formwandeinheiten 13 und 32 einzusetzenden Formwandeinheiten werden wiederum als aneinander befestigtes Paar mit der zur kernartigen Werkzeughälfte 11 gehörenden Formwandeinheit in den offenliegenden Rand des Werkzeugwandteiles 16 eingesetzt. Es werden die Schwenkriegelelemente der kernartigen Werkzeughälfte 11 in Verriegelungsstellung gebracht. Irgendwelche zwischen den beiden Formwandeinheiten wirksame Verbindungselemente oder Befestigungsteile werden entfernt. Der rahmenartige Werkzeugwandteil 38 der schalen- bzw. haubenartigen Werkzeughälfte 12 wird vorsichtig abgesenkt bis in die richtige Lage auf dem Werkzeugwandteil 16 der kernartigen Werkzeughälfte 11. Sodann werden die Schwenkriegelelemente 22 und 46 in der schalen- bzw. haubenartigen Werkzeugshälfte 12 in Verriegelungsstellung gebracht. Durch das gemeinsame Einsetzen der beiden Formwandeinheiten 13 und 32 und durch das Verriegeln der Formwandeinheit 32 im Werkzeugwandteil 38 bei geschlossenem Werkzeug ist sichergestellt, daß sämtliche Formwandteile in richtiger gegenseitiger Justierung in das Formwerkzeug 10 eingesetzt sind.

Wie Figur 6 zeigt, können auch Eckverbindungseinrichtungen 58 vorgesehen sein, die einen an der jeweiligen
Ecke des Werkzeugteiles 11 bzw. 12 schwenkbar gelagerten
Winkelhebel 59 enthalten. Die Zugelemente 31 sind vorzugsweise starre stabartige Elemente, die sowohl Zug als auch
Schub übertragen können. Dadurch werden bei Benutzung
von zwei Betätigungsvorrichtungen 56 nur zwei Eckverbindungseinrichtungen 54 bzw. 58 benötigt.

**0190663**

*15*

Wiesbaden, den 28. Januar 1986
E 359        VNR: 107565        S/ha


Hans Erlenbach
Hermann-Löns-Str. 13
5428 Nastätten

==========================================================
Werkzeug zum Herstellen von Formlingen
aus aufschäumbaren Kunststoffpartikeln
==========================================================


B e z u g s z e i c h e n l i s t e
=====================================

| | |
|---|---|
| 10 | Formwerkzeug |
| 11 | kernartige Werkzeughälfte |
| 12 | schalen- oder haubenartige Werkzeughälfte |
| 13 | Formwandeinheit von 11 |
| 14 | Formwandteil von 13 |
| 15 | Formwandträger von 13 |
| 16 | Werkzeugwandteil von 11 |
| 17 | Rückenwand von 16 |
| 18 | Werkzeughohlraum von 11 |
| 19 | Gummierung von 18 |
| 20 | Abstützelement |
| 21 | Widerlagerfläche in 16 |
| 22 | SChwenkriegelelemente |
| 23 | Verriegelungsflächenelemente |
| 24 | Keilflächen an 23 |
| 25 | Keilflächen an 22 |
| 26 | Schwenkriegelschaft |
| 27 | Lagerbuchsen |
| 28 | Druckfeder |
| 29 | Betätigungshebel |
| 30 | Verbindungselement |

| 31 | Zugelement |
| 32 | Formwandeinheit von 12 |
| 33 | Formwandteil von 32 |
| 34 | Formwandträger von 32 |
| 35 | Formwandträger von 32 |
| 36 | Werkzeughohlräume von 12 |
| 37 | Abstützelemente |
| 38 | Werkzeugwandteil |
| 39 | Widerlagerfläche |
| 40 | Rückfläche |
| 41 | Dichtelement |
| 42 | Flanschring |
| 43 | Widerlagerfläche |
| 44 | Anlagefläche |
| 45 | Dichtelement |
| 46 | Schwenkriegelelement |
| 47 | Schwenkriegelschaft |
| 48 | Gewindeabschnitt von 47 |
| 49 | Schwenkriegelaufnahme an 47 |
| 50 | Endabschnitt von 47 |
| 51 | Kontermuttern |
| 52 | Verriegelungsflächenelemente |
| 53 | Formenrahmen |
| 54 | Eckverbindungseinrichtungen |
| 55 | Kettenrad |
| 56 | Betätigungsvorrichtung |
| 57 | Mitnehmerkette |
| 58 | Eckverbindungseinrichtung |
| 59 | Winkelhebel |

**0190663**

Wiesbaden, den 28. Januar 1986
E 359    VNR: 107565    S/ha

Hans Erlenbach
Hermann-Löns-Str. 13
5428 Nastätten

=========================================================
Werkzeug zum Herstellen von Formlingen
aus aufschäumbaren Kunststoffpartikeln
=========================================================

P a t e n t a n s p r ü c h e
=================================

1) Werkzeug zum Herstellen von Formlingen aus aufschäumbaren Kunststoffpartikeln mit trennbaren Werkzeugteilen,
vorzugsweise einer schalenartigen und einer kernartigen
Werkzeughälfte, wobei den Formhohlraum umgebende, innere Formwandteile austauschbar in äußeren Werkzeugwandteilen angebracht sind, und zwischen den inneren Formwandteilen und äußeren Werkzeugwandteilen nach außen
abgedichtete, verschließbare Hohlräume als Kammern
für Heiz- und Kühlmittel sowie ggf. für Dampfzufuhr
gebildet sind,
dadurch gekennzeichnet, daß
in zumindest einem der Werkzeugteile (11, 12) eine
Formwandeinheit (13, 32) vorgesehen ist, bei der der
jeweilige Formwandteil (14, 33) bzw. die jeweiligen
Formwandteile an mindestens einem flansch- oder
plattenartigen Formwandträger (15, 34, 35) befestigt
ist bzw. sind, wobei der Formwandträger abgedichtet
passend in den rahmenartig ausgebildeten Werkzeugwandteil (16, 38) einsetzbar und mittels Riegelelementen
(22, 46) im Werkzeugwandteil (16, 38) befestigbar ist.

2) Werkzeug nach Anspruch 1, dadurch gekennzeichnet, daß im rahmenartig ausgebildeten Werkzeugwandteil (16, 38) vorreiberartige Schwenkriegelelemente (22, 46) angebracht sind, die verkeilend auf an den Formwandträgern angebrachte oder ausgebildete Verriegelungsflächen (23, 52) greifen und dabei den Randbereich des jeweiligen Formwandträgers (15, 34, 35) gegen eine im Werkzeugwandteil (16, 38) ausgebildete Widerlagerfläche (21, 39, 44) und ein dort angebrachtes Dichtungselement (27, 44, 45) pressen.

3) Werkzeug nach Anspruch 2, dadurch gekennzeichnet, daß die Schwenkriegelelemente (22, 46) mit auf die Verriegelungsflächen (23, 52) greifenden Keilflächen (25) versehen sind.

4) Werkzeug nach Anspruch 2 oder 3, dadurch gekennzeichnet, daß die Verriegelungsflächen (23, 52) der Formwandträger (15, 34, 35) mit Keilflächen (24) versehen sind, die mit den Schwenkriegelelementen (22, 46) verkeilend zusammengreifen.

5) Werkzeug nach einem der Ansprüche 2 bis 4, dadurch gekennzeichnet, daß die Schwenkriegelelemente (22, 46) an drehbar im jeweiligen Werkzeugwandteil (16, 38) gelagerten Schwenkriegelschäften (26, 47) angebracht sind.

6) Werkzeug nach einem der Ansprüche 2 bis 5, dadurch gekennzeichnet, daß die Schwenkriegelelemente (22, 46) für einen Schwenkwinkelbereich von 90° zwischen Freigabestellung und Verriegelungsstellung ausgebildet sind.

7) Werkzeug nach einem der Ansprüche 1 bis 6, gekennzeichnet durch eine Formwandeinheit (32), bei der der Formwandteil (33) bzw. die Formwandteile zwischen zwei flansch- bzw. plattenartigen Formwandträgern (34, 35) angebracht ist bzw. sind, von welchen der eine Formwandträger (34) die Vorderwand und der andere Formwandträger (35) die Rückwand für die außerhalb des Formhohlraumes liegenden Werkzeughohlräume (36) bildet, wobei der Formwandteil (33) bzw. die Formwandteile mit ihrem Rücken ggf. über Abstützelemente (37) gegen den die Rückwand bildenden Formwandträger (35) abgestützt ist bzw. sind.

8) Werkzeug nach Anspruch 7, dadurch gekennzeichnet, daß bei mit der Formwandeinheit verbundenen Zusatzeinrichtungen, wie Injektoren, Auswerfereinrichtungen, Dampfzuführungseinrichtungen usw., der mit dem Rücken des Formwandteiles (33) bzw. der Formwandteile verbundene Formwandträger (35) zugleich als Träger für die Zusatzeinrichtungen ausgebildet ist.

9) Werkzeug nach Anspruch 7 oder 8, dadurch gekennzeichnet, daß die durch die beiden Formwandträger (34, 35) mit dem dazwischen befestigten Formwandteil (33) bzw. Formwandteilen gebildete Formwandeinheit (32) zum Einsetzen von der einen offenen Rahmenseite her in den jeweiligen Werkzeugwandteil (38) ausgebildet ist.

10) Werkzeug nach einem der Ansprüche 7 bis 9, dadurch gekennzeichnet, daß für Formwandeinheiten (32) mit zwei den Formwandteil (33) bzw. die Formwandteile zwischen sich aufnehmenden, flansch- oder plattenförmigen Formwandträger (34, 35) je zwei Schwenkriegelelemente (22, 46) mit ihren Schwenkriegelschäften (47) zu axial ausgerichteten Schwenkriegelpaaren vereinigt sind, von denen das eine Schwenkriegelelement (22) auf de einen Formwandträger (34) und das andere Schwenkriegelelement (46) auf den zweiten Formwandträger (35) greift.

11) Werkzeug nach einem der Ansprüche 1 bis 6, dadurch gekennzeichnet, daß der rahmenartig ausgebildete Werkzeugwandteil (16) eine fest angebrachte Rückenwand (17) aufweist und der Formwandteil (14) bzw. die Formwandteile mit einem einzigen flansch- oder plattenförmigen Formwandträger (15) eine am Öffnungsrand des rahmenartigen Werkzeugwandteiles (16) passend und abgedichtet ansetzbare und verriegelbare Formwandeinheit (13) bildet, die ggf. auf die Innenseite der Rückenwand (17) des Werkzeugwandteiles (16) greifende Abstützelemente (20) aufweist.

12) Werkzeug nach Anspruch 11, dadurch gekennzeichnet, daß ein mit seinem Umfangsrand am Öffnungsrand des rahmenartigen Werkzeugwandteiles (16) passend ansetzbarer und verriegelbarer, plattenförmiger Formwandträger (15) vorgesehen ist, der an seiner Vorderseite einen oder mehrere kernförmige Formwandteile (14) und ggf. an der Rückseite Abstützelemente (20) trägt.

13) Werkzeug nach einem der Ansprüche 1 bis 12, dadurch gekennzeichnet, daß die Schwenkriegelelemente (22, 46) beweglich am Werkzeugwandteil (16, 38) angebracht sind und daß die an demselben Werkzeugwandteil (16, 38) angebrachten Schwenkriegelelemente (22, 46) mit Einrichtungen (29, 31, 54-56) zu gemeinsamer Betätigung verbunden sind.

14) Werkzeug nach Anspruch 13, dadurch gekennzeichnet, daß die Schwenkriegelelemente (22, 46) mit Betätigungshebeln (29) zum Erzeugen einer Drehbewegung des Schwenkriegelschaftes (26, 47) verbunden und diese Betätigungshebel (29) über Zugelemente (31), beispielsweise Ketten oder Zugkabel, untereinander verbunden sind.

15) Werkzeug nach Anspruch 13 oder 14, gekennzeichnet durch mindestens eine am Betätigungshebel (29) eines Schwenkriegelelements (22, 46) angreifende, maschinelle Betätigungsvorrichtung (56), beispielsweise hydraulische Zylinder-Kolben-Anordnung.

0190663

Fig.1

0190663

Fig.2

H.ERLENBACH E 364

0190663

Fig.3

H.ERLENBACH E 364

0190663

<u>Fig. 4</u>

H. ERLENBACH E 364

0190663

_Fig 5_

H.ERLENBACH E 364

0190663

Fig. 6

H.ERLENBACH E 364